# EUROPÄISCHE PATENTSCHRIFT

(11) **EP 1 859 125 B1**
(45) Veröffentlichungstag und Bekanntmachung des Hinweises auf die Patenterteilung: **26.11.2008**
(21) Anmeldenummer: 06708628.0
(22) Anmeldetag: 03.03.2006
(51) Int. Cl.: E21B 43/27, E21B 37/06

(54) **VERWENDUNG VON WASSERLÖSLICHEN ALKANSULFONSÄUREN ZUR ERHÖHUNG DER PERMEABILITÄT VON UNTERIRDISCHEN, CARBONATISCHEN ERDÖL- UND/ODER ERDGASFÜHRENDEN GESTEINSFORMATIONEN UND ZUM LÖSEN VON CARBONATISCHEN UND/ODER CARBONATHALTIGEN VERUNREINIGUNGEN BEI DER ERDÖLFÖRDERUNG**
USE OF WATER-SOLUBLE ALKANE SULFONIC ACIDS FOR INCREASING THE PERMEABILITY OF UNDERGROUND PETROLIFEROUS AND/OR GAS-BEARING CARBONATE ROCK FORMATIONS AND FOR DISSOLVING CARBONATE CONTAMINANTS AND/OR CONTAMINANTS CONTAINING CARBONATES DURING PETROLEUM PRODUCTION
UTILISATION D'ACIDES ALCANESULFONIQUES SOLUBLES DANS L'EAU POUR AUGMENTER LA PERMEABILITE DE FORMATIONS ROCHEUSES CONDUISANT LE PETROLE BRUT ET/OU LE GAZ NATUREL CARBONATIQUES SOUTERRAINS ET DETACHER LES IMPURETES CARBONATIQUES ET/OU CONTENANT DU CARBONATE LORS DE L'EXTRACTION DE PETROLE

(30) Priorität: 04.03.2005 DE 102005010564; 14.09.2005 DE 102005044034
(43) Veröffentlichungstag der Anmeldung: 28.11.2007
(73) Patentinhaber: BASF SE, 67056 Ludwigshafen (DE)
(72) Erfinder: HEIDENFELDER, Thomas, 67125 Dannstadt-Schauernheim (DE); GUZMANN, Marcus, 69242 Mühlhausen (DE); WITTELER, Helmut, 67157 Wachenheim (DE); OSSMER, Uwe, 67434 Neustadt (DE)
(86) Internationale Anmeldenummer: PCT/EP2006/060438
(87) Internationale Veröffentlichungsnummer: WO 2006/092438

(56) Entgegenhaltungen:
- EP-A- 0 656 417
- GB-A- 2 110 744
- US-A1- 2003 111 225

## Beschreibung

Die Erfindung betrifft Verwendung von Alkansulfonsäuren zur Erhöhung der Permeabilität von unterirdischen, carbonatischen erdöl- und/oder erdgasführenden Gesteinsformationen und zum Lösen von carbonatischen und/oder carbonathaltigen Verunreinigungen bei der Erdölförderung, insbesondere bei einer Temperatur von mindestens 100°C.

Bei der Erdöl- oder Erdgasgewinnung werden erdöl- und/oder erdgasführende Gesteinsformationen angebohrt. Typische Gesteinsformationen umfassen Sandsteinformationen und/oder Carbonatformationen. Bei Sandsteinformationen sind die Quarzpartikel durch andere Materialien, darunter auch Carbonaten zusammengebacken. Selbstverständlich können auch carbonatische Formationen einen gewissen Quarzanteil bzw. Silikatanteil aufweisen.

Das Erdöl- bzw. Erdgas fließt aufgrund der Differenz zwischen dem Druck in der Formation und dem Druck im Bohrloch durch feine Kanäle, Poren oder dergleichen in der Formation zum Bohrloch, und wird von dort an die Oberfläche gefördert. Der Druck in der Formation kann natürlichen Ursprungs sein oder auch beispielsweise durch Einpressen von Wasser, Wasserdampf oder anderen flüssigen oder gasförmigen Medien durch eine Injektionsbohrung künstlich aufrecht erhalten werden.

Um eine wirtschaftliche Fördergeschwindigkeit für Erdöl- oder Erdgas zu gewährleisten, muss die Porosität der Gesteinsformation ein gewisses Ausmaß erreichen. Häufig ist jedoch die Porosität der Gesteinsformation zu gering. Einerseits kann schon die natürliche Porosität zu gering sein, andererseits können aber an sich ausreichend große Poren im Laufe der Zeit mit Partikeln, beispielsweise Gesteinspartikeln verstopfen. Es ist daher bekannt, zur Schaffung von Poren und Kanälen, die Gesteinsformation hydraulisch zu sprengen (auch *"fracturing treatment" oder "fracturing" genannt*).

Verstopfungen können sich insbesondere durch CaCO₃ oder BaCO₃ bilden. In der Gesteinsformation ist unter den natürlich gegebenen Bedingungen (hoher Druck, hohe Temperatur) eine höhere Konzentration an Calciumcarbonat im Formationswasser gelöst als unter Normalbedingungen (1 bar, Raumtemperatur). Gelangt mit CaCO₃ gesättigtes Formationswasser in Zonen mit niedriger Temperatur und/oder niedrigerem Druck, so kristallisiert das CaCO3 bzw. BaCO₃ aus. Dies ist beispielsweise in der Nähe der Produktionsbohrung der Fall. Hierdurch wird die Porosität der Formation reduziert. Des Weiteren kühlt sich das Formationswasser auf dem Weg zur Erdoberfäche ab, wodurch sich auch CaCO₃-Beläge oder BaCO₃-Beläge im Bohrloch selbst bilden. Auch hierdurch wird die Produktivität einer Öl- oder Gasproduktion reduziert.

Es ist bekannt, derartige Verstopfungen im Bohrloch oder in der Formation durch eine Säurebehandlung zu lösen (auch *"acidizing treatment"* oder *"acidizing"* genannt). Weiterhin können durch eine Säurebehandlung auch neue Kanäle bzw. Poren in der Formation geschaffen werden. Nähere Einzelheiten hierzu sind beispielsweise in U//mann's Encyclopedia of Industrial Chemistry, 6th Edt., 2000 Electronic Release, "Ressources of Oil and Gas, 3.4.2. General Production Engineering*"* dargestellt.

Als Säuren für die Säurebehandlung werden beispielsweise wässrige Lösungen von HF und/oder HCI eingesetzt. HF eignet sich hierbei naturgemäß für silikatische Formationen, und FiCI wird insbesondere für carbonatische Formationen eingesetzt. Es ist aber auch schon die Verwendung organischer Säuren offenbart worden.

US 2005/16731 offenbart ein Verfahren zum Lösen von silikatischem Material in einer Sandsteinformation einer Erdöllagerstätte bei dem man zunächst eine gepufferte Lösung einer organischen Säure in die Formation einpresst und erst in einem zweiten Schritt eine HF-enthaltende Lösung. Bei der organischen Säure kann es sich beispielsweise um Ameisensäure, Essigsäure oder Citronensäure handeln.

US 2004/9880 offenbart eine Mischung zur Behandlung von Sandsteinformationen, welche Wasser, eine säurehydrolysierbare oberflächenaktive Substanz, eine anorganische Säure, beispielsweise HCI, und eine organische Säure umfasst. Bei der anorganischen Säure kann es sich beispielsweise um Salzsäure, Schwefelsäure oder Salpetersäure handeln, und bei der organischen Säure kann es sich beispielsweise um Ameisensäure, Essigsäure Citronensäure oder Methansulfonsäure handeln. Die Behandlung von carbonatischen Gesteinsformationen wird nicht offenbart.

HCl ist aufgrund des hohen Dampfdruckes nicht zum Einsatz bei höheren Temperaturen geeignet. Außerdem ist HCI insbesondere bei höheren Temperaturen stark korrosiv.

US 6,805,198 offenbart ein Verfahren zur Erhöhung der Permeabilität unterirdischer Gesteinsformationen bei höheren Temperaturen, insbesondere 92°C bis 204°C, unter Verwendung von organischen Dicarbonsäuren wie beispielsweise Oxalsäure, Malonsäure oder Adipinsäure. Hierbei kann es aber zu Bildung unerwünschter Niederschläge, beispielsweise von Ca-Oxalat kommen. Weiterhin benötigt man relativ große Mengen der vergleichsweise schwachen Säuren.

WO 95/14641 offenbart Alkansulfonsäuren, optional in Mischung mit anderen Säuren wie beispielsweise Amidosulfonsäure zum Entfernen von Kalkablagerungen insbesondere im Haushalt.

Aufgabe der Erfindung war es, ein verbessertes Verfahren zur Erhöhung der Permeabilität carbonatischer bzw. carbonathaltiger Formationen bereitzustellen, welches insbesondere bei höheren Temperaturen einsetzbar ist. Desweiteren war es Aufgabe der Erfindung, ein Verfahren zur Beseitigung von carbonathaltigen Belägen und Verstopfungen unabhängig von der Art der umgebenden Formation bereitzustellen.

Dementsprechend wurde die Verwendung von Alkansulfonsäuren, bevorzugt Methansulfonsäure, zur Erhöhung der Permeabilität von unterirdischen, carbonatischen erdöl- und/oder erdgasführenden Gesteinsformationen gefunden.

In einem zweiten Aspekt der Erfindung wurde Verwendung von wasserlöslichen Alkansulfonsäuren zum Lösen von carbonatischen und/oder carbonathaltigen Verunreinigungen bei der Erdölförderung gefunden.

In einem dritten Aspekt der Erfindung wurde ein Verfahren zur Erhöhung zur Erhöhung der Permeabilität von unterirdischen, carbonatischen erdöl- und/oder erdgasführenden Gesteinsformationen, bei dem man Alkansulfonsäuren oder eine Alkansulfonsäuren umfassende Formulierung durch mindestens ein Bohrloch in die Gesteinsformation einpresst.

In einer bevorzugten Ausführungsform der Erfindung handelt es sich um Gesteinsformationen mit einer Temperatur von mindestens 100°C.

Zu der Erfindung ist im Einzelnen das Folgende ausführen.

Der Begriff "carbonatische Gesteinsformation" ist dem Fachmann prinzipiell bekannt. Carbonatische Gesteinsformationen enthalten im Wesentlichen CaCO₃ und/oder MgCO₃, beispielsweise in Form von Magnesit, Dolomit, Kalkstein, Kreide oder Aragonit. Daneben können selbstverständlich noch weitere Carbonate vorhanden sein, wie beispielsweise SrCO₃ oder BaCO₃. Die Gesteinsformationen können selbstverständlich auch Verunreinigungen enthalten oder mit anderen Gesteinsformationen, beispielsweise silikatischen Formationen vermengt sein.

Der Begriff "carbonatische Gesteinsformation" soll auch carbonathaltige Gesteinsformationen umfassen, bei denen andere Mineralien den Hauptbestandteil bilden, aber die zumindest geringe Mengen an Carbonaten, insbesondere CaCO₃ und/oder MgCO₃, häufig amorph oder schlecht kristallisiert, enthalten. Carbonathaltige Gesteinsformationen enthalten in der Regel zumindest 1 Gew.-%, bevorzugt mindestens 2 Gew.-%, besonders bevorzugt mindestens 5 Gew.-% und ganz besonders bevorzugt mindestens 10 Gew.-% Carbonate, jeweils bezogen auf die Summer aller Komponenten. Als Beispiel seien silikatische Formationen genannt, bei denen silikatische und/oder Quarzpartikel mittels Carbonaten miteinander verbacken sein können.

Bei "carbonatischen und/oder carbonathaltigen Verunreinigungen bei der Erdölförderung" handelt es sich um an sich unerwünschte Ablagerungen derartiger Materialien, die in allen Stadien der Erdölförderung von der Formation bis zu den Erdölabfüllanlagen auftreten können. Hierbei kann es sich beispielsweise um Verunreinigungen in der Gesteinsformation handeln. Es kann sich auch um carbonatische Ablagerungen auf der Formationsoberfläche handeln. Derartige Verunreinigungen sind beispielsweise Filterkuchen aus CaCO₃, die sich während des Bohrvorganges bilden, und die nach dem Bohrvorgang wieder entfernt werden müssen. Carbonatische Ablagerungen können auch dann entstehen, wenn durch unvorhergesehenes Eindringen von Calciumcarbonat enthaltenden Bohrspülungen die Formation geschädigt wird. Auch kann es sich um carbonatische Ablagerungen auf der Formationsoberfläche handeln, die durch Ausfällungen (verusacht durch Druck- oder Temperaturabsenkung) aus der wässrigen, Phase innerhalb der Formation entstanden sind. Bei diesen Formationen muss es sich nicht um carbonatische Formationen handeln, sondern es kann sich beispielsweise auch um silikatische Formationen handeln.

Carbonatische und/oder carbonathaltige Verunreinigungen können im Zuge der Erdölfördrung auch außerhalb der Formation entstehen. Zu nennen sind hier insbesondere Bohrlöcher, beispielsweise Injektionsbohrungen oder Produktionsbohrungen, Anlagen am Ort der Erdölförderung, wie beispielsweise Wasser/Öl-Trennanlagen, Erdölpipelines oder dergleichen.

Erfindungsgemäß werden wasserlösliche Alkansulfonsäuren verwendet. Selbstverständlich können auch Gemische verschiedener Alkansulfonsäuren eingesetzt werden. Alkansulfonsäuren weisen die allgemeine Formel: R¹-SO₃H auf, wobei es sich bei R¹ um einen geradkettigen, verzweigten oder cyclischen Alkylrest handelt. Der Fachmann wählt den Rest unter der Maßgabe, dass die Alkansulfonsäure noch eine ausreichende Löslichkeit in Wasser aufweisen soll. Dies richtet sich selbstverständlich auch nach der für die jeweilige Anwendung vorgesehenen Konzentration. Im Regelfalle handelt es sich bei R¹ um einen geradkettigen oder verzweigten C₁- bis C₆-Alkylrest, bevorzugt um einen C₁- bis C₄-Alkylrest.

Besonders bevorzugt wird zur Ausführung Methansulfonsäure (abgekürzt MSA, Formel: CH₃-SO₃H) eingesetzt. Methansulfonsäure ist eine sehr starke Säure (pKₐ: -2), weist aber im Gegensatz zu HCI oder Ameisensäure nur einen geringen Dampfdruck auf. Sie ist daher ganz besonders auch noch zum Einsatz bei höheren Temperaturen geeignet. Methansulfonsäure kann vorteilhaft zur Behandlung von Gesteinsformationen mit einer Temperatur von mindestens 60°C, insbesondere 60 bis 250°C eingesetzt werden. Bevorzugt beträgt die Temperatur der zu behandelnden Gesteinsformation 100 bis 240°C, besonders bevorzugt 120 bis 230°C, ganz besonders bevorzugt 140 bis 220°C und beispielsweise 160 bis 220°C. Sie kann selbstverständlich auch bei niedrigeren Temperaturen, beispielsweise bei Temperaturen ab 20°C eingesetzt werden.

Es kann reine, 100% ige MSA verwendet werden. Bevorzugt wird aber eine saure, Wässrige Lösung bzw. Formulierung von MSA eingesetzt. Bei dem Lösemittel handelt es sich bevorzugt um Wasser, es kann aber auch noch geringe Mengen organischer, mit Wasser mischbarer Lösemittel enthalten. Hierbei kann es sich insbesondere um Alkohole, beispielsweise Methanol, Ethanol oder Propanol handeln. In der Regel beträgt der Anteil von Wasser mindestens 80 Gew.-%, bevorzugt 90 Gew.-% und besonders bevorzugt mindestens 95 Gew.-% jeweils bezogen auf die Gesamtmenge aller eingesetzten Lösemittel.

Die Konzentration von MSA in der Lösung bzw. Formulierung wird vom Fachmann je nach dem gewünschten Anwendungszweck gewählt. Bewährt hat sich aber eine Konzentration von mindestens 5 Gew.-%, bevorzugt mindestens 10 Gew.-%, besonders bevorzugt mindestens 20 Gew.-% und ganz besonders bevorzugt mindestens 50 Gew.-%, jeweils bezogen auf die Summe aller Komponenten der Lösung bzw. Formulierung. Beispielsweise kann die Konzentration 65 bis 75 Gew.-% betragen.

MSA kann erfindungemäß besonders vorteilhaft als einzige Säure verwendet werden. Selbstverständlich kann sie aber auch in Kombination mit anderen Säuren verwendet werden. Hierbei sollte, insbesondere bei hohen Anwendungstemperaturen, aber auf leichtflüchtige Säuren verzichtet werden. Insbesondere sollte eine erfindungsgemäß verwendete Formulierung bei Anwendungstemperaturen von größer 150°C keine HCI und/oder HF bzw. HF-Precursor enthalten. Beispiele weiterer Säuren umfassen auch organische Säuren wie beispielsweise p-Toluolsulfonsäure.

Bevorzugte Säurekombinationen umfassen synergistische Mischungen von Alkansulfonsäuren, insbesondere MSA mit Schwefelsäurederivaten.

Besonders bevorzugt ist eine Kombination von MSA mit Amidosulfonsäure H₂N-SO₃H. Überraschenderweise wurde gefunden, dass Mischungen vom MSA und Amidosulfonsäure zu einer beschleunigten Auflösung von CaCO₃ führen. Das Verhältnis von MSA / Amidosulfonsäure sollte hierbei in der Regel 50:1 bis 1:50, bevorzugt 10:1 bis 1:10, besonders bevorzugt 5:1 bis 1:3 und ganz besonders bevorzugt 4:1 bis 1:1 betragen.

In einer weiteren, bevorzugten Ausführungsform der Erfindung kann die Säure in Kombination mit mindestens einem wasserlöslichen Korrosionsinhibitor eingesetzt werden. Dem Fachmann sind Korrosionsinhibitoren bekannt und er trifft eine geeignete Auswahl je nach dem gewünschten Anwendungszweck. Selbstverständlich können auch Mischungen verschiedener Korrosionsinhibitoren eingesetzt werden. Der Gehalt an Korrosionsinhibitor wird vom Fachmann je nach der gewünschten Anwendung gewählt.

Beispiele geeigneter wasserlöslicher Korrosionsinhibitoren umfassen Alkin-Derivate, wie beispielsweise Propargylalkohol oder 1,4-Butindiol.

In einer bevorzugten Ausführungsform der Erfindung handelt es sich um alkoxylierte Alkinderivate der allgemeinen Formel

HC=C-CH₂-O(-CH₂-CHR²-O-)ₙH (I),

oder

H(-O-CHR²-CH₂-)ₙ-O-CH₂-C=C-CH₂-O(-CH₂-CHR²-O-)ₙH (II),

wobei die Reste R²jeweils unabhängig voneinander für H oder Methyl und die Indices n und n' unabhängig voneinander für 1 bis 10 stehen. Es ist dem Fachmann bekannt, dass derartige Alkoxygruppen insbesondere durch Oxalkylierung oder ausgehend von technischen Polyglykolen erhältlich sind. Die genannten Werte für n stehen somit für durchschnittliche Kettenlängen, wobei der Durchschnittswert selbstverständlich nicht eine natürliche Zahl sein muss, sondern auch eine beliebige rationale Zahl sein kann. Bevorzugt handelt es sich bei n und n' und eine Zahl von 1 bis 3.

Bei den Alkylenoxygruppen kann es sich um ausschließlich von Ethylenoxid-Einheiten abgeleitete Gruppen handeln oder um ausschließlich von Propylenoxid abgeleiteten Gruppen. Selbstverständlich kann es sich aber auch um Gruppen handeln, die sowohl Ethylenoxid-Einheiten wie Propylenoxid-Einheiten aufweisen. Bevorzugt handelt es sich um Polyoxyethyleneinheiten.

Weiterhin bevorzugte Korrosionsinhibitoren zur Ausführung der vorliegenden Erfindung sind polymere Korrosionsinhibitoren. Hierbei handelt es sich insbesondere um wasserlösliche oder wasserdispergierbare, im Wesentlichen unvernetzte Homo- oder Copolymere, welche mindestens 50 Gew.-% (Meth)acrylsäureeinheiten enthalten. Bevorzugt umfassen die Polymere darüber hinaus auch noch weitere, von (Meth)acrylsäure verschiedene saure Monomere.

Insbesondere kann es sich um wasserlöslich oder zumindest wasserdispergierbare Polymere handeln, welche aus folgenden Komponenten aufgebaut sind:
(A) 50 bis 99,9 Gew.-% (Meth)acrylsäure
(B) 0,1 bis 50 Gew.-% mindestens eines weiteren, von (Meth)acrylsäure verschiedenen ethylenisch ungesättigten Monomeren, welches mindestens eine saure Gruppe aufweist, sowie
(C) 0 bis 30 Gew.-% weiterer ethylenisch ungesättigter Comonomere, die mit (A) und (B) copolymerisierbar sind.

Die Mengenangaben sind jeweils auf die Gesamtmenge aller Bestandteile des Polymeren bezogen. Bevorzugt betragen die Mengen von (A) 50 bis 90 Gew.-%, (B) 10 bis 50 Gew.-% und (C) 0 bis 20 Gew.-%.

Die Comonomere (B) müssen mit (Meth)acrylsäure sowie ggf. weiteren Comonomeren copolymerisierbar sein. Bei den sauren Gruppen kann es sich ebenfalls um Carboxylatgruppen, aber auch um andere saure Gruppen wie beispielsweise Phosphorsäure-, Phosphonsäure- oder Sulfonsäuregruppen handeln. Die Comonomere können jeweils nur über gleichartige oder auch über verschiedenartige saure Gruppen verfügen. Selbstverständlich können auch mehrere verschiedene Comonomere (B) mit sauren Gruppen eingesetzt werden.

Beispiele von Comonomeren (B) umfassen COOH-Gruppen aufweisende Säuren der allgemeinen Formel R³HC=CH-(CH₂)ₙ-COOH mit n=1 bis 8, und R³= H oder C₁ bis C₃ wie beispielsweise Vinylessigsäure, Crotonsäure oder Isocrotonsäure, zwei COOH-Gruppen aufweisende ungesättigte Säuren wie Maleinsäure oder Fumarsäure, Phosphonsäuregruppen aufweisende Säuren wie Vinylphosphonsäure, Allyphosphonsäure oder 3-Butenylphosphonsäure, Phosphorsäuregruppen aufweisende Säuren wie Phosphorsäuremonovinylester, Phosphorsäuremonoallylester, Phosphorsäure(mono-3-butenyl)ester oder (Meth)acrylsäure(phosphonoxyethyl)ester oder Sulfonsäuregruppen aufweisende Säuren wie Styrolsulfonsäure. Beispiele besonders geeigneter Comonomerer (B) umfassen Maleinsäure, Fumarsäure und Vinylphosphonsäure.

Die Comonomere (C) umfassen eine ethylenisch ungesättigte Gruppe, aber keine saure Gruppe umfassen. Beispiele derartiger Monomerer umfassen Olefine wie Ethylen, Propylen oder Styrol, Ester aus Vinylalkohol und Monocarbonsäuren, insbesondere wie Vinylacetat oder Vinylpropionat sowie weiterhin insbesondere (Meth)acrylate mit verschiedensten Alkoholresten wie Methyl(meth)acrylat, Ethyl(meth)acrylat, n-Butyl(meth)-acrylat oder 2-Ethylhexyl(meth)acrylat. Es kann sich weiterhin auch um OH-Gruppen aufweisende Monomere handeln, wie beispielweise p-Vinylphenol oder insbesondere ethoxylierte oder propoxylierte (Meth)acrylsäure.

Polymere der genannten Art sowie ihre Herstellung sowie sind beispielsweise in WO 04/74372, Seite 3 bis Seite 18 ausführlich beschreiben.

Die Formulierung kann darüber hinaus selbstverständlich noch übliche Zusatzstoffe und Hilfsmittel umfassen, die für eine Säurebehandlung von öl- bzw. gasführenden Gesteinsformationen typisch sind. Beispiele derartiger Hilfsmittel umfassen beispielsweise Polymere zur Erhöhung der Viskosität, Tenside, Schaumbildner oder Schaumbrecher, Oxidationsmittel, Enzyme, Hilfsmittel zum Reduzieren der Reibung oder zur Kontrolle von Paraffinausscheidungen sowie Biozide. Bevorzugt können als Hilfsmittel außerdem Komplexbildner wie Nitrilotriessigsäure (NTA), Ethylendiamintetraessigsäure (EDTA), Diethylenetriaminpentaessigsäure (DTPA), Hydroxyethylethylendiamintriessigsäure (HEDTA) oder Methylglycindiessigsäure (MGDA) eingesetzt werden. Der Gehalt an Zusatzstoffen wird vom Fachmann je nach der gewünschten Anwendung gewählt.

Zur Ausführung des erfindungsgemäßen Verfahrens wird die saure Formulierung in prinzipiell bekannter Art und Weise durch mindestens eine Bohrung in die Gesteinsformation gepresst. Hierbei kann es sich um eine Produktionsbohrung handeln oder auch um eine Injektionsbohrung. Bei der Produktionsbohrung handelt es sich um eine Bohrung, durch die auch Erdöl bzw. Erdgas entnommen wird. Die Injektionsbohrung dient zum Einpressen von Flutmedien zur Aufrechterhaltung des Drucks in der Lagerstätte. Eine Behandlung der Injektionsbohrung verringert Druckverluste beim Einpressen des Flutmediums und trägt somit auch vorteilhaft zu einer höheren Produktivität bei.

Bei der Säurebehandlung werden carbonatische und/oder carbonathaltige Verunreinigungen gelöst und/oder auch neue Kanäle bzw. Poren in der Formation gebildet.

Sofern nur Verunreinigungen in einer Produktions- und/oder Injektionsbohrung gelöst werden sollen, ist es ausreichend, die Bohrung mit der sauren Formulierung zu behandeln.

Die Einwirkzeit wird vom Fachmann je nach den lokalen Gegebenheiten an der jeweiligen Bohrstelle bestimmt. Sie ist beispielsweise abhängig von der Art der Formation bzw. der zu entfernenden Beläge und/oder Verunreinigungen und der Konzentration der Säure. Die Einwirkzeit kann wenige Minuten bis zu mehreren Tagen betragen.

Die erfindungsgemäße Säurebehandlung kann auch vorteilhaft mit einer hydraulischen Sprengung der Formation verbunden werden. Hierbei kann zunächst eine Sprengung der Formation mit einem beliebigen Flutmedium, beispielsweise Wasser, vorgenommen werden. Die hydraulische Sprengung kann aber auch mit der erfindungsgemäß verwendeten sauren Formulierung selbst vorgenommen werden. Ob eine einfache Säurebehandlung ohne hydraulische Sprengung der Formation oder eine kombinierte Sprengung/Säurebehandlung erfolgt, kann vom Fachmann in prinzipiell bekannter Art und Weise durch Wahl des Drucks bestimmt werden, mit der die saure Formulierung in die Formation eingepresst wird.

Die folgenden Beispiele sollen die Erfindung näher erläutern:

### Beispiel 1: Auflösegeschwindigkeit für CaCO₃

240 ml einer 0,104 molaren CaCO₃-Suspension wurden unter den in Tabelle 1 angegebenen Bedingungen mit 10 ml Säure versetzt und die Zeit bis zur vollständigen Auflösung des CaCO₃ gemessen. Die jeweiligen Säuren wurden in äquimolarem Verhältnis eingesetzt. Die Werte wurden jeweils mit und ohne Rühren bestimmt. Die Daten sind in Tabelle 1 zusammengestellt.

**Tabelle 1: Auflösegeschwindigkeit für CaCO₃ [Angaben in Minuten]**

| Temperatur: 23°C | | | | | |
|---|---|---|---|---|---|
| Säure | Menge [Gew.-%] in Wasser | Auflösezeit [min] | | Relative Auflösezeit [MSA = 100%] | |
| | | ohne Rühren | mit Rühren | ohne Rühren | mit Rühren |
| MSA | 70 | 1086 | 23,2 | 100% | 100% |
| HCl | 26,5 | 1058 | 36,0 | 97,4 % | 155 % |
| HCOOH | 33,5 | > 5760 | 47,3 | > 530 % | 204 % |

| Temperatur: 40°C | | | | | |
|---|---|---|---|---|---|
| Säure | Menge [Gew.-%] in Wasser | Auflösezeit [min] | | Relative Auflösezeit [MSA = 100%] | |
| | | ohne Rühren | mit Rühren | ohne Rühren | mit Rühren |
| MSA | 70 | 162 | 11,7 | 100% | 100% |
| HCI | 26,5 | 239 | 33,3 | 148 % | 285 % |
| HCOOH | 33,5 | > 540 | 28,1 | > 333 % | 240 % |

| Temperatur: 68°C | | | | | |
|---|---|---|---|---|---|
| Säure | Menge [Gew.-%] in Wasser | Auflösezeit [min] | | Relative Auflösezeit [MSA = 100%] | |
| | | ohne Rühren | mit Rühren | ohne Rühren | mit Rühren |
| MSA | 70 | 57 | 4,5 | 100% | 100% |
| HCI | 26,5 | 81 | 13,1 | 142 % | 291 % |
| HCOOH | 33,5 | 378 | 37,2 | 663 % | 827 % |

### Beispiel 2: Vergleich zwischen der Korrosionsrate von Salz- und Methansulfonsäure

Die Korrosionsrate wurde bestimmt durch Einwirken von Säure auf einen Prüfkörper aus Stahl bestimmt. Als Prüfkörper wurde Stahl der Werkstoffnummer 1.0425 verwendet.

Der Abtrag pro Fläche wurde durch Auswiegen vor und nach der Säureeinwirkung bestimmt (siehe Tabelle 2):

**Tabelle 2: Korrosionsrate von Stahl in HCI und MSA (90 min, 75°C)**

| Säure | Abtrag [g/cm²] |
|---|---|
| HCI [26,55] | 1,60 |
| MSA [70,00] | 0,08 |

### Beispiel 3: Korrosionsraten von Salz- und Methansulfonsäure in Anwesenheit von Inhibitoren

Für die Tests wurden die folgenden Inhibitoren eingesetzt.:

| Typ | Beschreibung |
|---|---|
| A | Modifizierte Polyacrylsäure |
| B | Copolymer auf Basis Maleinsäure / Acrylsäure / Vinylphosphonsäure |
| C | Propargylalkohol |
| D | Porpargylalkoholalkoxylat |

Die Korrosionsraten wurden wie in Beispiel 2 beschrieben bestimmt. Die Ergebnisse sind jeweils in Tabellen 3 und 4 zusammengestellt.

**Tabelle 3: Korrosionsrate von Stahl in MSA/HCI in Gegenwart von Inhibitoren (60 min, 75°C)**

| **Säure** | **Inhibitor** | **Konzentration** | **g/cm²** |
|---|---|---|---|
| HCl 26,5% | ohne | - | 1,325 |
| HCl 26,5% | A | 1 % | 1,263 |
| HCl 26,5% | B | 1 % | 1,083 |
| HCl 26,5% | C | 1 % | 0,003 |
| HCl 26,5% | D | 1 % | 0,001 |
| MSA 70% | ohne | - | 0,073 |
| MSA 70% | B | 1 % | 0,048 |
| MSA 70% | A | 1 % | 0,040 |
| MSA 70% | D | 1 % | 0,003 |
| MSA 70% | C | 1 % | 0,002 |

**Tabelle 4: Korrosionsrate von Stahl in MSA/HCI in Gegenwart von Inhibitoren (180 min, 75°C)**

| **Säure** | **Inhibitor** | **Konzentration** | **g/cm²** |
|---|---|---|---|
| HCl 26,5% | - | | a) |
| MSA 70% | - | | 0,137 |
| HCl 26.5% | A | 0,5 % | a) |
| MSA 70% | A | 0,5 % | 0,132 |
| HCI 26,5% | D | 0,67 % | a) |
| MSA 70% | D | 0,67 % | 0,005 |
| HCI 26,5% | B | 0,5 % | a) |
| MSA 70% | B | 0,5 % | 0,098 |

| | | | |
|---|---|---|---|
| a) Prüfkörper wurde im Reaktionsmedium vollständig aufgelöst. | | | |

### Beispiel 4: Synergistischer Effekt zwischen Methansulfonsäure und Amidosulfonsäure

215 ml einer CaCO₃-Suspension (0,104 mol/l) wurden bei einer Temperatur von 68 °C mit 35 ml der in Tabelle 5 aufgeführten Säuremischung versetzt und die Zeit bis zur vollständigen Auflösung des CaCO₃ gemessen. Die Ergebnisse sind in Tabelle 5 zusammengestellt und in Abb. 1 graphisch dargestellt.

**Tabelle 5: Zeit für das Auflösen von CaCO₃ einer Mischung von Amidosulfonsäure und Methansulfonsäure.**

| **MSA** | **Amidosulfonsäure** | **Auflösezeit** |
|---|---|---|
| [Gew.-%] in Wasser | [Gew.-%] in Wasser | [min] |
| 20 | 0 | 27,65 |
| 15 | 5 | 16,35 |
| 10 | 10 | 8,5 |
| 5 | 15 | 12,85 |
| 0 | 20 | 26,58 |

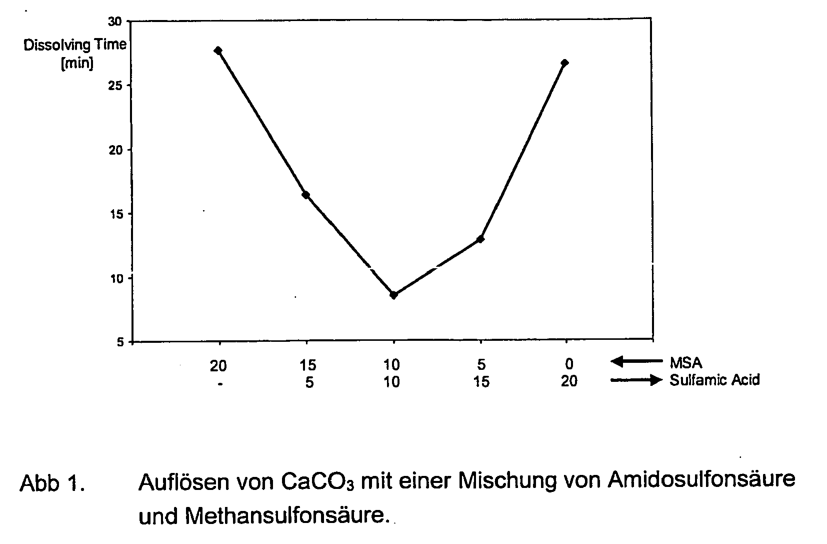

Die Ergebnisse der Beispiele und Vergleichsbeispiele zeigen, dass MSA wesentlich bessere Eigenschaften beim Lösen carbonatischer Materialien bei höheren Temperaturen zeigen als HCI oder HCOOH. Während die Unterschiede bei Raumtemperatur noch nicht so ausgeprägt sind, sind die Unterschiede bei 68°C, also typischen Temperaturen von Gesteinsformationen sehr ausgeprägt. Bedingt durch das schnellere Lösen muss die Erdölförderung für eine Säurebehandlung dann auch nicht so lange unterbrochen werden.

Bei längeren Einwirkungen von Salzsäure lässt sich die Korrosion auch bei Zusatz von Korrosionsinhibitoren nicht stoppen. Methansulfonsäure wirkt auch ohne Inhibitoren wesentlich weniger korrosiv als Salzsäure, obwohl es sich um eine starke Säure handelt. Schon durch Zusatz geringer Inhibitormengen lässt sich die Korrosion nahezu vollständig unterdrücken.

## Patentansprüche

1. Verwendung von wasserlöslichen Alkansulfonsäuren zur Erhöhung der Permeabilität von unterirdischen, carbonatischen und/oder carbonathaltigen erdöl- und/oder erdgasführenden Gesteinsformationen.

2. Verwendung von wasserlöslichen Alkansulfonsäuren zum Lösen von carbonatischen und/oder carbonathaitigen verunreinigungen bei der Erdölförderung.

3. Verwendung gemäß Anspruch 2, **dadurch gekennzeichnet, dass** es sich um carbonatische und/oder carbonathaltige Verunreinigungen in der Formation handelt.

4. Verwendung gemäß Anspruch 2, **dadurch gekennzeichnet, dass** es sich um carbonatische und/oder carbonathaltige Verunreinigungen auf der Formationsoberfläche handelt.

5. Verwendung gemäß Anspruch 1, 3 oder 4 **dadurch gekennzeichnet, dass** die Temperatur der Gesteinsformation mindestens 100°C beträgt.

6. Verwendung gemäß einem der Ansprüche 1 bis 5, **dadurch gekennzeichnet, dass** man eine wässrige Formulierung mit einem Gehalt von mindestens 20 Gew.-% Alkansulfonsäure einsetzt.

7. Verwendung gemäß einem der Ansprüche 1 bis 6, **dadurch gekennzeichnet, dass** man die Alkansulfonsäure im Gemisch mit mindestens einem Korrosionsinhibitor einsetzt.

8. Verwendung gemäß Anspruch 7, **dadurch gekennzeichnet, dass** es sich bei dem Korrosionsinhibitor um alkoxylierte Alkinderivate der allgemeinen Formel
HC=C-CH₂-O(-CH₂-CHR²-O-)ₙH (I),
oder
H(-O-CHR²-CH₂-)ₙ-O-CH₂-C=C-CH₂-O(-CH₂-CHR²-O-)ₙ-H (II),
handelt, wobei die Reste R² jeweils unabhängig voneinander für H oder Methyl und die Indices n und n' unabhängig voneinander für 1 bis 10 stehen.

9. Verwendung gemäß Anspruch 7, **dadurch gekennzeichnet, dass** es sich bei dem Korrosionsinhibitor um mindestens ein Homo- oder Copolymer handelt, welches mindestens 50 Gew.-% (Meth)acrylsäureeinheiten umfasst.

10. Verwendung gemäß einem der Ansprüche 1 bis 9, **dadurch gekennzeichnet, dass** man die Alkansulfonsäure in einer synergistischen Mischung mit Amidosulfonsäure einsetzt.

11. Verwendung gemäß einem der Ansprüche 1 bis 10, **dadurch gekennzeichnet, dass** es sich bei der Alkansulfonsäure um Methansulfonsäure handelt.

12. Verfahren zur Erhöhung der Permeabilität von unterirdischen, carbonatischen und/oder carbonathaltigen erdöl- und/oder erdgasführenden Gesteinsformationen und/oder zum Lösen von carbonatischen und/oder carbonathaltigen Verunreinigungen bei der Erdölförderung, bei dem man eine saure Formulierung durch mindestens eine Bohrung in die Gesteinsformation einpresst, **dadurch gekennzeichnet, dass** es sich bei der sauren Formulierung um mindestens eine wasserlösliche Alkansulfonsäure oder eine wässrige, Alkansulfonsäuren umfassende Formulierung handelt.

13. Verfahren gemäß Anspruch 12, **dadurch gekennzeichnet, dass** es sich um eine Produktionsbohrung handelt.

14. Verfahren gemäß Anspruch 12, **dadurch gekennzeichnet, dass** es sich um eine Injektionsbohrung handelt.

15. Verfahren gemäß einem der Ansprüche 12 bis 14, **dadurch gekennzeichnet, dass** die Temperatur mindestens 100°C beträgt.

16. Verfahren gemäß einem der Ansprüche 12 bis 15, **dadurch gekennzeichnet, dass** man eine wässrige Lösung mit einem Gehalt von mindestens 20 Gew.-% Alkansulfonsäure einsetzt.

17. Verfahren gemäß einem der Ansprüche 12 bis 16, **dadurch gekennzeichnet, dass** man die Alkansulfonsäuren im Gemisch mit mindestens einem Korrosionsinhibitor einsetzt.

18. Verfahren gemäß Anspruch 17, **dadurch gekennzeichnet, dass** es sich bei dem Korrosionsinhibitor um alkoxylierte Alkinderivate der allgemeinen Formel
HC=C-CH₂-O(-CH₂-CHR²-O-)ₙH (I),
oder
H(-O-CHR²-CH₂-)ₙ-O-CH₂-C=C-CH₂-O(-CH₂-CHR²-O-)_{n·}H (II),
handelt, wobei die Reste R² jeweils unabhängig voneinander für H oder Methyl und die Indices n und n' unabhängig voneinander für 1 bis 10 stehen.

19. Verfahren gemäß Anspruch 17, **dadurch gekennzeichnet, dass** es sich bei dem Korrosionsinhibitor um mindestens ein Homo- oder Copolymer handelt, welches mindestens 50 Gew.-% (Meth)acrylsäureeinheiten umfasst.

20. Verfahren gemäß einem der Ansprüche 12 bis 19, **dadurch gekennzeichnet, dass** man Alkansulfonsäure in einer synergistischen Mischung mit Amidosulfonsäure einsetzt.

21. Verfahren gemäß einem der Ansprüche 12 bis 20, **dadurch gekennzeichnet, dass** es sich bei der Alkansulfonsäure um Methansulfonsäure handelt.

## Claims

1. The use of water-soluble alkanesulfonic acids for increasing the permeability of underground, carbonatic and/or carbonate-containing mineral oil- and/or natural gas-carrying rock formations.

2. The use of water-soluble alkanesulfonic acids for dissolving carbonatic and/or carbonate-containing impurities in mineral oil production.

3. The use according to claim 2, wherein the impurities are carbonatic and/or carbonate-containing impurities in the formation.

4. The use according to claim 2, wherein the impurities are carbonatic and/or carbonate-containing impurities on the formation surface.

5. The use according to claim 1, 3 or 4, wherein the temperature of the rock formation is at least 100°C.

6. The use according to any of claims 1 to 5, wherein an aqueous formulation having a content of at least 20% by weight of alkanesulfonic acid is used.

7. The use according to any of claims 1 to 6, wherein the alkanesulfonic acid is used as a mixture with at least one corrosion inhibitor.

8. The use according to claim 7, wherein the corrosion inhibitor is an alkoxylated alkyne derivative of the general formula
HC≡C-CH₂-O(-CH₂CHR²-O-)ₙH (I),
or
H(-O-CHR²-CH₂-)ₙ-O-CH₂-C≡C-CH₂-O(-CH₂-CHR²-O-)_{n·}H (II),
where the radicals R², in each case independently of one another, are H or methyl and the indices n and n', independently of one another, are from 1 to 10.

9. The use according to claim 7, wherein the corrosion inhibitor is at least one homo- or copolymer which comprises at least 50% by weight of (meth)acrylic acid units.

10. The use according to any of claims 1 to 9, wherein the alkanesulfonic acid is used as a synergistic mixture with amidosulfonic acid.

11. The use according to any of claims 1 to 10, wherein the alkanesulfonic acid is methanesulfonic acid.

12. A method for increasing the permeability of underground, carbonatic and/or carbonate-containing mineral oil- and/or natural gas-carrying rock formations and/or for dissolving carbonatic and/or carbonate-containing impurities in mineral oil production, in which an acidic formulation is forced through at least one well into the rock formation, wherein the acidic formulation is at least one water-soluble alkanesulfonic acid or an aqueous formulation comprising alkanesulfonic acids.

13. The method according to claim 12, wherein the well is a production well.

14. The method according to claim 12, wherein the well is an injection well.

15. The method according to any of claims 12 to 14, wherein the temperature is at least 100°C.

16. The method according to any of claims 12 to 15, wherein an aqueous solution having a content of at least 20% by weight of alkanesulfonic acid is used.

17. The method according to any of claims 12 to 16, wherein the alkanesulfonic acids are used as a mixture with at least one corrosion inhibitor.

18. The method according to claim 17, wherein the corrosion inhibitor is an alkoxylated alkyne derivative of the general formula
HC≡C-CH₂-O(-CH₂-CHR²-O-)ₙH (I),
or
H(-O-CHR²-CH₂-)ₙ-O-CH₂-C≡C-CH₂-O(-CH₂-CHR²-O-)ₙ·H (II),
where the radicals R², in each case independently of one another, are H or methyl and the indices n and n', independently of one another, are from 1 to 10.

19. The method according to claim 17, wherein the corrosion inhibitor is at least one homo- or copolymer which comprises at least 50% by weight of (meth)acrylic acid units.

20. The method according to any of claims 12 to 19, wherein alkanesulfonic acid is used as a synergistic mixture with amidosulfonic acid.

21. The method according to any of claims 12 to 20, wherein the alkanesulfonic acid is methanesulfonic acid.

## Revendications

1. Utilisation d'acides alcane sulfoniques solubles dans l'eau pour augmenter la perméabilité de formations rocheuses produisant du pétrole et/ou du gaz naturel souterraines, carbonatées et/ou contenant des carbonates.

2. Utilisation d'acides alcane sulfoniques pour dissoudre des impuretés carbonatées et/ou contenant des carbonates lors de l'extraction de pétrole.

3. Utilisation selon la revendication 2, **caractérisée en ce qu'**il s'agit d'impuretés carbonatées et/ou contenant des carbonates dans la formation.

4. Utilisation selon la revendication 2, **caractérisée en ce qu'**il s'agit d'impuretés carbonatées et/ou contenant des carbonates à la surface de la formation.

5. Utilisation selon la revendication 1, 3 ou 4, **caractérisée en ce que** la température de la formation rocheuse est supérieure ou égale à 100 °C.

6. Utilisation selon l'une quelconque des revendications 1 à 5, **caractérisée en ce qu'**une formulation aqueuse ayant une teneur en acide alcane sulfonique supérieure ou égale à 20 % en poids est utilisée.

7. Utilisation selon l'une quelconque des revendications 1 à 6, **caractérisée en ce que** l'acide alcane sulfonique est utilisé en mélange avec au moins un inhibiteur de corrosion.

8. Utilisation selon la revendication 7, **caractérisée en ce que** l'inhibiteur de corrosion est un dérivé d'alcyne alcoxylé de formule générale
HG≡C-CH₂-O(-CH₂-CHR²-O-)*ₙ*H (I)
ou
H(-O-CHR²-CH₂-)ₙ-O-CH₂-C=C-CH₂-O(-CH₂-CHR²-O-)_{n·}H (II),
les radicaux R² représentant chacun indépendamment les uns des autres H ou méthyle et les indices n et n' représentant indépendamment l'un de l'autre 1 à 10.

9. Utilisation selon la revendication 7, **caractérisée en ce que** l'inhibiteur de corrosion est au moins un homo- ou copolymère qui contient au moins 50 % en poids d'unités acide (méth)acrylique.

10. Utilisation selon l'une quelconque des revendications 1 à 9, **caractérisée en ce que** l'acide alcane sulfonique est utilisé en un mélange synergique avec de l'acide amidosulfonique.

11. Utilisation selon l'une quelconque des revendications 1 à 10, **caractérisée en ce que** l'acide alcane sulfonique est l'acide méthane sulfonique.

12. Procédé d'augmentation de la perméabilité de formations rocheuses produisant du pétrole et/ou du gaz naturel souterraines, carbonatées et/ou contenant des carbonates et/ou de dissolution d'impuretés carbonatées et/ou contenant des carbonates lors de l'extraction de pétrole, selon lequel une formulation acide est pressée dans au moins un puit de forage dans la formation rocheuse, **caractérisé en ce que** la formulation acide est au moins un acide alcane sulfonique soluble dans l'eau ou une formulation aqueuse contenant des acides alcane sulfoniques.

13. Procédé selon la revendication 12, **caractérisé en ce qu'**il s'agit d'un puit de forage de production.

14. Procédé selon la revendication 12, **caractérisé en ce qu'**il s'agit d'un puit de forage d'injection.

15. Procédé selon l'une quelconque des revendications 12 à 14, **caractérisé en ce que** la température est supérieure ou égale à 100 °C.

16. Procédé selon l'une quelconque des revendications 12 à 15, **caractérisé en ce qu'**une solution aqueuse ayant une teneur en acide alcane sulfonique supérieure ou égale à 20 % en poids est utilisée.

17. Procédé selon l'une quelconque des revendications 12 à 16, **caractérisé en ce que** les acides alcane sulfoniques sont utilisés en mélange avec au moins un inhibiteur de corrosion.

18. Procédé selon la revendication 17, **caractérisé en ce que** l'inhibiteur de corrosion est un dérivé d'alcyne alcoxylé de formule générale
HC≡C-CH₂-O(-CH₂-CHR²-O-)ₙH (I)
ou
H(-O-CHR²-CH₂-)ₙ-O-CH₂-C≡C-CH₂-O(-CH₂-CHE²-O-)ₙ·H (II),
les radicaux R² représentant chacun indépendamment les uns des autres H ou méthyle et les indices n et n' représentant indépendamment l'un de l'autre 1 à 10.

19. Procédé selon la revendication 17, **caractérisé en ce que** l'inhibiteur de corrosion est au moins un homo- ou copolymère qui contient au moins 50 % en poids d'unités acide (méth)acrylique.

20. Procédé selon l'un quelconque des revendications 12 à 19, **caractérisée en ce que** l'acide alcane sulfonique est utilisé en un mélange synergique avec de l'acide amidosulfonique.

21. Procédé selon l'une quelconque des revendications 12 à 20, **caractérisé en ce que** l'acide alcane sulfonique est l'acide méthane sulfonique.
